(19)

Europäisches
Patentamt
European
Patent Office
Office européen
des brevets

(11) **EP 2 645 611 A1**

(12) **EUROPEAN PATENT APPLICATION**

(43) Date of publication:
**02.10.2013 Bulletin 2013/40**

(21) Application number: **12305366.2**

(22) Date of filing: **29.03.2012**

(51) Int Cl.:
*H04L 1/00* (2006.01)  *H04L 1/18* (2006.01)
*H04L 1/20* (2006.01)  *H04L 25/03* (2006.01)
*H04L 25/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Aydin, Osman**
 **70569 Stuttgart (DE)**
• **Braun, Volker**
 **70176 Stuttgart (DE)**

(74) Representative: **Kleinbub, Oliver et al
Alcatel-Lucent Deutschland AG
Intellectual Property & Standards
Lorenzstrasse 10
70435 Stuttgart (DE)**

(54) **A method for triggering transmissions, and a network device therefor**

(57) The invention concerns a method for triggering of a retransmission or a new transmission from a first network device to a second network device, wherein a comparison of evaluation soft bits (ESB) of a transmission with a decision threshold is performed in the second network device, based on said comparison, either an ACK message or a NACK message is sent to the first network device, in parallel, said evaluation soft bits (ESB) are decoded in a FEC decoder (DEC) in the second network device, and the second network device triggers in case of a sent ACK message and a successful decoding (PASS) of said evaluation soft bits in the FEC decoder a new transmission from the first network device, and in case of a sent ACK message and an unsuccessful decoding (FAIL) of said evaluation soft bits (ESB) in the FEC decoder (DEC) a retransmission from the first network device.

Fig. 4

## Description

### Field of the invention

The invention relates to a method for determination whether a transmission from a first network device to a second network device has been successful and triggering of a retransmission or a new transmission, and a network device adapted to perform said method.

### Background

In wireless communication networks using e.g. Third Generation Partnership Project Long Term Evolution (3GPP LTE) or High Speed Packet Access (HSPA), the use of a centralized processing architecture, where a centralized baseband unit (BBU) performs the baseband processing for a potentially large number of radio cells is supported. Optical fiber transmission between a baseband unit and remote radio heads (RRH) e.g. using CPRI links (CPRI = Common Public Radio Interface) causes a round-trip transmission latency of $10\mu s$/km. The round-trip transmission latency reduces the time available in the channel elements (CE) of a baseband unit for the signal processing, which in turn puts a limit on the maximum fiber length between the baseband unit and the remote radio heads that can be supported.

In HSPA and LTE, a synchronized HARQ protocol (HARQ = Hybrid Automatic Repeat Request) is used in uplink, with a fixed number of 8 HARQ processes and a strict timing. According to said timing, if an uplink transmission is performed in subframe n, then a downlink ACK/NACK is sent in subframe n+4, and an uplink retransmission or a new uplink transmission is performed in subframe n+8. The use of a synchronized HARQ protocol in uplink makes the uplink the critical link for centralized base station architectures.

E.g. in an LTE case, when aligning the uplink and downlink timing at a base station antenna port, i.e. enhanced NodeB (eNB) antenna port, then exactly 3ms processing delay corresponding to 3 subframes are available in the base station from the end of receiving a Physical Uplink Shared Channel (PUSCH) until the beginning of transmission of a downlink ACK/NACK and/or a downlink scheduling grant. This 3ms eNB processing delay includes the round-trip transmission latency, i.e. the time needed for transmission from an Rx antenna of the eNB to a channel element (CE) and from a channel element (CE) to a Tx antenna of the eNB, eNB hardware round-trip delays, as e.g. delays due to radio frequency (RF) filters or signal processing in a remote radio head, and the actual signal processing delay in the channel elements of a baseband unit (BBU). In this case, the time advance used by a user terminal is given as 2 times the propagation delay. In order to support fiber lengths of 100km on the BBU-RRH link, the effective processing time available in the channel elements has be shortened to about 2ms. This is feasible in principle but is expected to add significant costs to the BBU channel elements as compared to current solutions.

### Summary

Currently, an ACK/ NACK is computed according to a cyclic redundancy check (CRC) PASS/ FAIL, which is performed after a Forward Error Correction (FEC) decoding, as e.g. Turbo decoding. The Turbo decoding is computationally complex and therefore requires a major share of the available eNB processing delay. In other words, the computation of ACK/ NACK has to wait for the result of the Turbo decoder for one subframe in LTE.

The object of the invention is thus to reduce the effective processing time in the channel elements of a BBU without drastically adding costs and complexity to the BBU channel elements.

The principle idea of the invention is based on an accelerated downlink ACK/NACK processing. Said principle idea is to base an ACK/NACK processing not on the results of FEC decoding, but to start transmission of a predicted ACK/NACK prior to completion of the FEC decoding. This saves approximately one subframe of the available eNB processing delay, which corresponds to 1ms in LTE. This gained 1ms can e.g. be spent for an additional one-way fiber length between baseband unit and remote radio head corresponding to 100km.

The prediction of ACK/NACK can be performed based on so-called soft information available at a channel output or at a FEC decoder input, as e.g. soft bits represented as logarithmic likelihood ratios (LLR) at a FEC decoder input.

The object of the invention is thus achieved by a method for determination whether a transmission from a first network device to a second network device has been successful and triggering of a retransmission or a new transmission, wherein

- a comparison of evaluation soft bits of the transmission with at least one decision threshold is performed in the second network device,
- based on said comparison of the evaluation soft bits of the transmission with the at least one decision threshold, either a positive acknowledgement message or a negative acknowledgement message is sent to the first network device,
- in parallel, said evaluation soft bits are decoded in a forward error correction decoder in the second network device,
- and the second network device triggers in case of a sent positive acknowledgement message and a successful decoding of said evaluation soft bits in the forward error correction decoder a new transmission from the first network device, and in case of a sent positive acknowledgement message and an unsuccessful decoding of said evaluation soft bits in the forward error correction decoder a retransmission from the first network device.

The object of the invention is furthermore achieved by a network device for determination whether a transmission from a further network device to said network device has been successful and triggering of a retransmission or a new transmission, wherein said network device is adapted to

- perform a comparison of evaluation soft bits of the transmission with at least one decision threshold,
- send based on said comparison of the evaluation soft bits of the transmission with the at least one decision threshold either a positive acknowledgement message or a negative acknowledgement message to the further network device,
- in parallel, decode said evaluation soft bits in a forward error correction decoder,
- and trigger in case of a sent positive acknowledgement message and a successful decoding of said evaluation soft bits in the forward error correction decoder a new transmission from the further network device, and in case of a sent positive acknowledgement message and an unsuccessful decoding of said evaluation soft bits in the forward error correction decoder a retransmission from the further network device.

The invention is described in the following within the framework of 3GPP LTE, however as the invention is not restricted to 3GPP LTE or enhancements thereof, but can in principle be applied in other networks that use scheduling principles based on ACK/NACK processing, like e.g. in HSPA or WiMAX networks (WiMAX = Worldwide Interoperability for Microwave Access), in the following, instead of the term eNodeB used in LTE, the more general term base station is used.

Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows an example of a timing diagram for a synchronous uplink HARQ process.

Fig. 4 schematically shows an example of an accelerated downlink ACK/NACK processing according to an embodiment of the invention.

**Description of the embodiments**

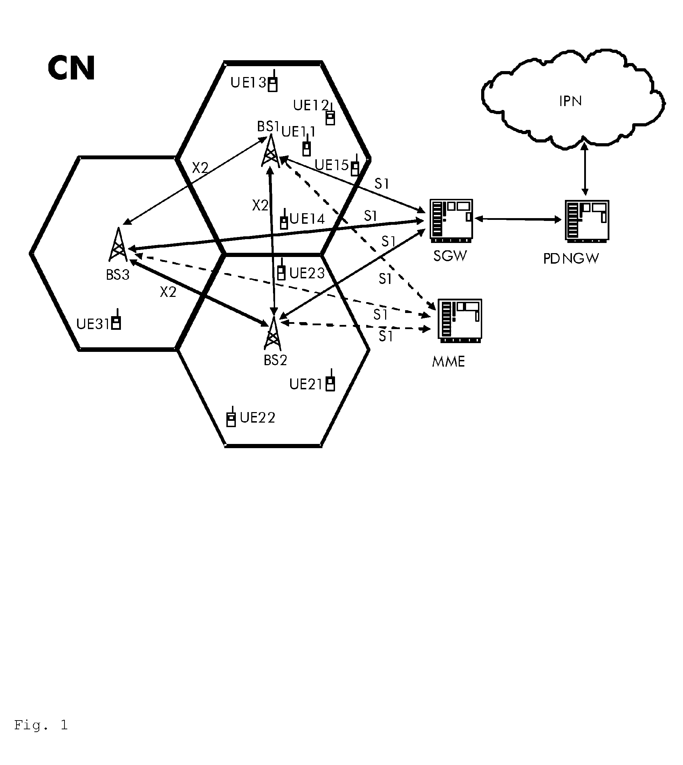

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signalling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

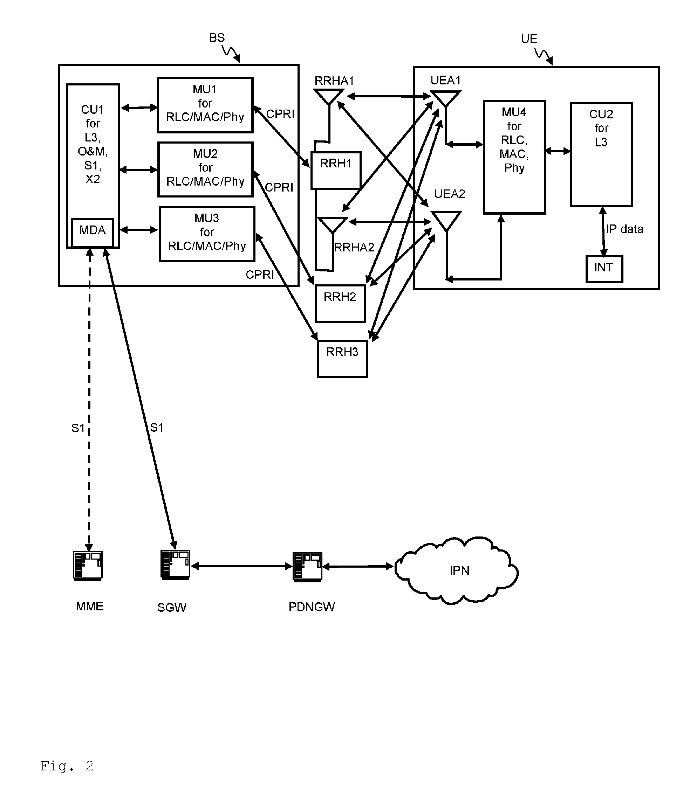

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1- MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR- SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1- MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

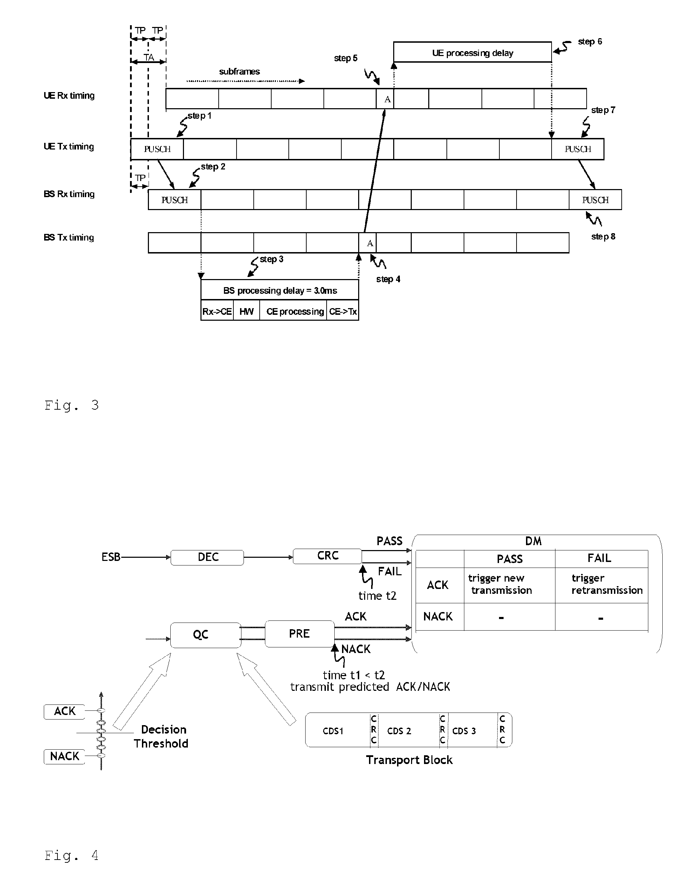

In the sequel, first in fig. 3 an example of a timing diagram for a synchronous uplink HARQ process is described, and then in fig. 4 an example of an accelerated downlink ACK/NACK processing according to an embodiment of the invention is disclosed.

Fig. 3 schematically shows an example of a timing diagram for a synchronous uplink HARQ process for communication between a user terminal UE and a base station BS.

Fig. 3 shows the message flow in several subframes between an Rx timing and a Tx timing at an antenna connector (Rx = Receive; Tx = Transmit) of the user terminal UE, and an Rx timing and a Tx timing at an antenna connector of the base station BS. Said antenna connector can e.g. be located in a remote radio head (RRH1- RRH3) as depicted in fig. 2.

In the first row, the Rx timing of the subframes for the user terminal antenna is depicted, and in the second row, the Tx timing of the subframes for the user terminal antenna is depicted. In the third row, the Rx timing of the subframes for the base station antenna is depicted, and in the fourth row, the Tx timing of the subframes for the base station antenna is depicted.

In step 1 of the method for a synchronous uplink HARQ process depicted in fig. 3, the user terminal antenna transmits user data in a Physical Uplink Shared Channel (PUSCH) to the base station BS.

In step 2, the base station antenna receives the user data transmitted in the Physical Uplink Shared Channel (PUSCH) with a propagation delay TP due to the transmission time needed for transmission from the user terminal to the base station.

In step 3, the processing of the received user data is performed in the base station BS. The uplink and downlink timing shall be aligned at the base station antenna port, and thus exactly 3ms processing delay corresponding to 3 subframes in LTE are available in the base station BS from the end of receiving the Physical Uplink Shared Channel (PUSCH) until the beginning of transmission of a downlink ACK/NACK and/or a downlink scheduling grant. This 3ms processing delay in the base station BS includes the round-trip transmission latency, i.e. the time needed for transmission from the antenna of the base station BS to a channel element (CE) and from a channel element(CE) to the antenna of the base station BS, base station hardware round-trip delays, as e.g. delays due to radio frequency (RF) filters or signal processing in a remote radio head (RRH), and the actual signal processing delay in the channel elements of a baseband unit (BBU). In this case, the time advance TA used by the user terminal UE is given as 2 times the propagation delay TP, i.e. the transmission time needed for transmission from the user terminal UE to the base station BS.

During the signal processing in the channel elements (CE), an ACK/NACK is computed according to a cyclic redundancy check (CRC) PASS/FAIL, which is performed after a Forward Error Correction (FEC) decoding, as e.g. a Turbo decoding. The Turbo decoding is computationally complex and therefore requires a major share of the available base station processing delay. In other words, the computation of ACK/NACK has to wait for the result of the Turbo decoder for one subframe in LTE.

In an alternative of the embodiment, a PASS/FAIL is computed directly after FEC decoding without CRC by assessing FEC internal metrics, e.g. when decoding by means of a trellis is applied PASS is computed if the absolute value of the difference of the two strongest path metrics exceeds a threshold. Alternatively PASS/FAIL can also be computed by assessing the statistics at the decoder output, e.g. PASS is generated if the logarithmic likelihood ratios of all the payload bits at decoder output are above a threshold.

In step 4, the base station antenna transmits an ACK/NACK to the user terminal UE e.g. in a Physical HARQ Indicator Channel (PHICH).

In step 5, the user terminal antenna receives the ACK/NACK transmitted in the Physical HARQ Indicator Channel (PHICH) with a propagation delay TP due to the transmission time needed for transmission from the base station BS to the user terminal UE.

In step 6, a processing of uplink user data, as e.g. Turbo Coding and data modulation, is performed in the user terminal.

In step 7, the user terminal antenna in case of a received ACK transmits new user data in a Physical Uplink Shared Channel (PUSCH) to the base station BS, and in case of a received NACK retransmits the user data transmitted in step 1 in a Physical Uplink Shared Channel (PUSCH) to the base station BS. The transmission or retransmission of data takes place 8 subframes after the last uplink transmission of user data in step 1.

In step 8, the base station antenna receives the user data transmitted in the Physical Uplink Shared Channel (PUSCH) with a propagation delay TP due to the transmission time needed for transmission from the user terminal to the base station.

As already mentioned above, the Turbo decoding performed in the baseband unit in step 3 above is computationally complex and therefore requires a major share of the available processing delay in the base station BS. In order to support greater distances between a baseband unit and remote radio heads, the required signal processing time must be reduced, as a gained signal processing time of 1ms can e.g. be spent for an additional one-way fiber length of 100km between the baseband unit and the remote radio heads.

Fig. 4 shows a method for signal processing in a baseband unit of a base station with a reduced signal processing time. According to the embodiment of the invention depicted in fig. 4, this is achieved by means of an accelerated downlink ACK/NACK processing. Said signal processing can e.g. be performed in one of the three modem unit boards MU1-MU3 depicted in fig. 2 and described above.

Uplink data received in a baseband unit of a base station are processed as so-called soft bits. Soft bits are obtained after demodulation and prior to FEC decoding, i.e. analogue so-called IQ values are typically converted into soft bits by a demodulator prior to FEC decoding. A soft bit s indicates e.g. the logarithmic likelihood ratio that a measured value y corresponds to a bit b=1 or b=0 according to the following formula:

$$s = \ln\left(\frac{P(y|b=1)}{P(y|b=0)}\right).$$

In this formula $P(y|b=1)$ and $P(y|b=0)$ indicate the probability that the measured value y corresponds to a bit b=1 or b=0. Thus, a high positive value for s indicates, that the measured value is very likely "1", and a high negative value for s indicates that the measured value is very likely "0". A value s=0 indicates that "1" and "0" have an equal probability.

In the method depicted in fig. 4, at least some of the soft bits that represent the received uplink data are used as evaluation soft bits ESB and are sent both to an input of a forward error correction decoder DEC, and to an input of a quality checker QC.

In the quality checker QC, it is determined whether the reliability of the evaluation soft bits ESB is above or below a decision threshold. In an embodiment of the invention, the absolute value of the evaluation soft bits can be determined and compared with the decision threshold.

E.g. based on the formula

$$s = \ln\left(\frac{P(y|b=1)}{P(y|b=0)}\right)$$ for calculating soft bits s as given above, the absolute value of the evaluation soft bits can be determined as $$|s| = \left|\ln\left(\frac{P(y|b=1)}{P(y|b=0)}\right)\right|.$$ The

higher the absolute value of an evaluation soft bit ESB is, the higher the reliability of the evaluation soft bit ESB is. Thus, if the absolute value of an evaluation soft bit ESB is above the decision threshold, an ACK indication for the respective evaluation soft bit ESB is sent to an ACK/NACK prediction module PRE, and if the absolute value of an evaluation soft bit ESB is below the decision threshold, a NACK indication for the respective evaluation soft bit ESB is sent to the ACK/NACK prediction module PRE. In the ACK/NACK prediction module PRE, based on the received ACK indications and NACK indications of a code block segment CDS1-CDS3, it is decided whether an ACK message or a NACK message is sent to the respective user terminal from the output of the ACK/NACK prediction module PRE at time t1. The determination whether an ACK message or a NACK message is sent can be based on a statistical evaluation of the received ACK indications and NACK indications of evaluation soft bits of code block segments CDS1-CDS3. E.g. an ACK message can be sent if only ACK indications are received, or if the percentage of received ACK indications is above an ACK threshold.

Preferably, said ACK threshold or said decision threshold is chosen and signaled to the baseband unit of the base station by a network control device, as e.g. Operation and Maintenance (O&M).

In a further embodiment of the invention, the quality checker QC determines an average of the absolute values of the evaluation soft bits ESB of a code block segment CDS1-CDS3 of a transport block used e.g. in LTE or HSPA. If the average of the absolute values of the evaluation soft bits ESB of a code block segment CDS1-CDS3 is above a decision threshold, an ACK indication for the respective code block segment CDS1-CDS3 is sent to the ACK/NACK prediction module PRE, and if the average of the absolute values of the evaluation soft bits ESB of a code block segment CDS1-CDS3 is below the decision threshold, a NACK indication for the respective code block segment CDS1-CDS3 is sent to the ACK/NACK prediction module PRE. ACK/NACK messages are transmitted per packet, i.e. transport block, comprising at least one code block segment. Thus, the ACK/NACK prediction module PRE sends at time t1 to the respective user terminal an ACK message e.g. if a ratio of received ACK indications to received NACK indications for a transport block is above an ACK threshold, and e.g. a NACK message if said ratio is below said ACK threshold.

In the embodiments described above, instead of comparing the absolute value of an evaluation soft bit ESB or the average of the absolute values of evaluation soft bits ESB with a decision threshold in order to determine ACK/NACK indications, the value of an evaluation soft bit ESB can be compared with 2 decision thresholds +d and -d. If the value s of the evaluation soft bit ESB is higher than d or lower than -d, then the evaluation soft bit ESB is reliable, and an ACK indication is sent from the quality checker QC to the ACK/NACK prediction module PRE. If the value s of the evaluation soft bit ESB is lower than d and higher than -d, then the evaluation soft bit ESB, or the average of the values of evaluation soft bits ESB is not reliable, and a NACK indication is sent from the quality checker QC to the ACK/NACK prediction module PRE.

The ACK/NACK prediction module PRE sends ACK/NACK messages not only to the respective user terminal, but also to a decision module DM in the baseband unit.

In case a NACK message is sent to the respective user terminal, preferably also a scheduling grant to trigger a retransmission is transmitted at time t1 to the respective user terminal.

In case a very reliable ACK is predicted in the ACK/NACK prediction module PRE also a new transmission can be triggered e.g. by means of a scheduling grant transmitted at time t1 to the respective user terminal. An ACK is e.g. very reliable, if the absolute values of a predefined preferably high percentage of evaluation soft bits ESB are above a further decision threshold which is higher than said decision threshold mentioned above. Alternatively, an ACK is e.g. very reliable, if a ratio of received ACK indications to received NACK indications for a transport block is above a further ACK threshold which is higher than said ACK threshold mentioned above.

Preferably, said further decision threshold or said further ACK threshold is chosen and signaled to the baseband unit of the base station by a network control device, as e.g. Operation and Maintenance (O&M) .

Instead of having a separate quality checker QC and ACK/NACK prediction module PRE as in the embodiments described above, the functions of said quality checker QC and ACK/NACK prediction module PRE can be performed by a single device in further embodiments.

In the forward error correction decoder DEC, the evaluation soft bits ESB are decoded, and then a cyclic redundancy check CRC is performed. A PASS/ FAIL result of the cyclic redundancy check CRC is available at time t2 > t1 and is transferred to the decision module DM. A PASS result is e.g. transferred if all cyclic redundancy checks CRC of the code block segments CDS1-CDS3 of a transport block are passed, otherwise a FAIL result is transferred. As the quality checker QC has far lower computational complexity than the forward error correction decoder DEC, the prediction of ACK/ NACK can be performed faster than the determination of PASS/FAIL based on the FEC decoding and cyclic redundancy check CRC. The PASS/FAIL result may differ from the ACK/NACK transmitted from the ACK/NACK prediction module PRE.

The decision module DM collects the ACK/ NACK and PASS/FAIL inputs from the quality checker QC and ACK/NACK prediction module PRE, and the cyclic redundancy check CRC, respectively, and depending on the inputs it triggers actions. In simplified form this is summarized in the table depicted in fig. 4. In more general the proposed decision module can be described by means of a state machine with a small number of states.

If a NACK has been predicted by the ACK/ NACK prediction module PRE and transmitted to the respective user terminal and to the decision module DM in the baseband unit, then independent of a PASS or FAIL result of the cyclic redundancy check CRC a retransmission is performed by the respective user terminal. Said retransmission is either directly triggered by the NACK message initiated by the ACK/NACK prediction module PRE, or alternatively triggered by a scheduling grant also initiated by the ACK/NACK prediction module PRE. As a result, in case of a NACK predicted by the ACK/NACK prediction module PRE, the decision module DM needs not to trigger any additional actions.

In case of an ACK predicted by the ACK/NACK prediction module PRE and transmitted to the respective user terminal and to the decision module DM in the baseband unit, and a PASS result of the cyclic redundancy check CRC, a new transmission from the respective user terminal is triggered by the decision module preferably by means of a scheduling grant sent in case of LTE on a Physical Downlink Control Channel (PDCCH) at time t1+8ms. However, in an alternative of the embodiment, already the ACK message transmitted at time t1 can trigger a processing of the new transmission in the respective user terminal, as e.g. depicted in step 6 in fig. 3, and thus the new transmission on a Physical Uplink Shared Channel (PUSCH) can be triggered by a scheduling grant which arrives at the respective user terminal after the corresponding ACK message and can already start approximately 3ms after reception of the ACK message, as e.g. depicted in step 7 in fig. 3.

In case of an ACK predicted by the ACK/NACK prediction module PRE and transmitted to the respective user terminal and to the decision module DM in the baseband unit, and a FAIL result of the cyclic redundancy check CRC, a retransmission from the respective user terminal is triggered by the decision module preferably by means of a scheduling grant. Said scheduling grant is allowed to arrive at the respective user terminal after the corresponding ACK message, as e.g. represented by step 5 in fig. 3. This is enabled by the so-called "Fake ACK" feature of LTE, as according to said "Fake ACK", when a downlink ACK message is received by a user terminal, the respective HARQ buffer is not cleared until a change in the New Data Indicator is obtained via downlink grant. Thus, this enables to send a downlink ACK message and trigger a retransmission 8ms, i.e. 8 subframes, later.

In a yet further embodiment of the invention, the quality checker QC compares averages of the absolute values of the evaluation soft bits ESB of different code block segment CDS1-CDS3 to determine the weakest, i.e. the most unreliable code block segment CDS1-CDS3. The ACK/NACK prediction module PRE is informed about said most unreliable code block segment CDS1-CDS3, and the ACK/NACK prediction module PRE performs a FEC decoding followed by a cyclic redundancy check CRC only of said most unreliable code block segment CDS1-CDS3. Based on the CRC result PASS/FAIL of said most unreliable code block segment CDS1-CDS3, either an ACK message or a NACK message is transmitted to the respective user terminal and the decision module DM. In an alternative of the embodiment, not the most unreliable code block segment, but the first code block segment of a packet is FEC decoded followed by a cyclic redundancy check CRC in the ACK/NACK prediction module PRE. In particular for very large packets consisting of many code block segments, the method according to said embodiment reduces the processing effort. The CRC result of the first or the most unreliable code block segments together with results of the quality checker QC with respect to the corresponding evaluation soft bits ESB can give a good indication of the CRC result of the whole packet.

Accelerated ACK/NACK processing according to the embodiments of the invention may be useful also in a conventional base station implementation with baseband unit (BBU) and remote radio head (RRH) at same location in order to enable reduced HARQ round trip time (RTT), in particular for delay-sensitive services. E.g., accelerated ACK/NACK processing according to the embodiments of the invention can be applied for a delay-sensitive service with ACK/NACK transmitted with 3ms delay corresponding to 6ms RTT, while conventional ACK/NACK processing is applied for a delay-insensitive service with ACK/NACK transmitted with 4ms delay corresponding to 8ms RTT.

The invention can be useful also for a next generation air interface in order to reduce round trip delays especially if the "Fake ACK" feature and code block segmentation as in LTE is enabled.

**Claims**

1. A method for determination whether a transmission from a first network device (UE) to a second network device (BS) has been successful and triggering of a retransmission or a new transmission, wherein

   • a comparison of evaluation soft bits (ESB) of the transmission with at least one decision threshold is performed in the second network device (BS),
   • based on said comparison of the evaluation soft bits (ESB) of the transmission with the at least one decision threshold, either a positive acknowledgement message (ACK) or a negative acknowledgement message (NACK) is sent to the first network device (UE),
   • in parallel, said evaluation soft bits (ESB) are decoded in a forward error correction decoder (DEC) in the second network device (BS),
   • and the second network device (BS) triggers in case of a sent positive acknowledgement message (ACK) and a successful decoding (PASS) of said evaluation soft bits (ESB) in the forward error correction decoder (DEC) a new transmission from the first network device (UE), and in case of a sent positive acknowledgement message (ACK) and an unsuccessful decoding (FAIL) of said evaluation soft bits (ESB) in the forward error correction decoder (DEC) a retransmission from the first network device (UE).

2. A method according to claim 1, wherein a successful decoding (PASS) of said evaluation soft bits (ESB) results from a passed cyclic redundancy check (CRC) of said evaluation soft bits (ESB), and an unsuccessful decoding (FAIL) of said evaluation soft bits (ESB) results from a failed cyclic redundancy check (CRC) of said evaluation soft bits (ESB).

3. A method according to claim 1 or 2, wherein if a negative acknowledgement message (NACK) is sent to the first network device (UE), also a scheduling grant to trigger a retransmission is sent to the first network device (UE).

4. A method according to any of the preceding claims, wherein if a comparison of the evaluation soft bits (ESB) of the transmission with a further decision threshold indicates a reliable positive acknowledgement message (ACK), a scheduling grant to trigger a new transmission is sent to the first network device (UE) before determination whether a successful decoding (PASS) of said evaluation soft bits (ESB) in the forward error correction decoder (DEC) has been performed.

5. A method according to any of the preceding claims, wherein said evaluation soft bits (ESB) of the transmission are in one of a group of a first code block segment (CDS1) and a most unreliable code block segment (CDS1- CDS3) of the transmission.

6. A method according to any of the preceding claims, wherein said evaluation soft bits (ESB) are represented as logarithmic likelihood ratios.

7. A method according to claim 6, wherein an average value derived from said logarithmic likelihood ratios for at least two of said evaluation soft bits (ESB) is calculated, and said average value is compared with said at least one decision threshold.

8. A method according to claim 5, wherein soft bits of the transmission are represented as logarithmic likelihood ratios, average values derived from said logarithmic likelihood ratios are calculated for different code block segments (CDS1- CDS3), and said most unreliable code block segment (CDS1) of the transmission is determined based on said average values of said logarithmic likelihood ratios.

9. A method according to any of the preceding claims, wherein said transmission is an uplink transmission from a user terminal (UE) to one of a group of a base station (BS) and a remote radio head (RRH).

10. A method according to any of the preceding claims, wherein said method is only applied if said transmission belongs to a delay sensitive service.

**11.** A method according to any of the preceding claims, wherein a network control device chooses said decision threshold and signals said decision threshold to the second network device (BS).

**12.** A method according to claim 4, wherein a network control device chooses said further decision threshold and signals said further decision threshold to the second network device (BS).

**13.** A network device (BS) for determination whether a transmission from a further network device (UE) to said network device (BS) has been successful and triggering of a retransmission or a new transmission, wherein said network device (BS) is adapted to

• perform a comparison of evaluation soft bits (ESB) of the transmission with at least one decision threshold,
• send based on said comparison of the evaluation soft bits (ESB) of the transmission with the at least one decision threshold either a positive acknowledgement message (ACK) or a negative acknowledgement message (NACK) to the further network device (UE),
• in parallel, decode said evaluation soft bits (ESB) in a forward error correction decoder (DEC),
• and trigger in case of a sent positive acknowledgement message (ACK) and a successful decoding (PASS) of said evaluation soft bits (ESB) in the forward error correction decoder (DEC) a new transmission from the further network device (UE), and in case of a sent positive acknowledgement message (ACK) and an unsuccessful decoding (FAIL) of said evaluation soft bits (ESB) in the forward error correction decoder (DEC) a retransmission from the further network device (UE).

**14.** A communication network for mobile communication comprising at least one network device (BS) according to claim 13.

Fig. 1

Fig. 2

Fig. 3

Fig. 4

| | Europäisches Patentamt European Patent Office Office européen des brevets | **EUROPEAN SEARCH REPORT** | **Application Number** EP 12 30 5366 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 946 320 A (DECKER PETER [DE]) 31 August 1999 (1999-08-31) * column 5; claim 10 * ----- | 1-14 | INV. H04L1/00 H04L1/18 H04L1/20 H04L25/03 H04L25/06 |
| X | US 2010/296601 A1 (KIM YONG HO [KR]) 25 November 2010 (2010-11-25) * page 2, paragraph 18; claim 4 * ----- | 1-14 | |
| A | US 2009/245436 A1 (CHAUDHURI ARUNAVA [US] ET AL) 1 October 2009 (2009-10-01) * page 2, paragraph 36 - page 3; figure 6 * ----- | 1-14 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| The Hague | 14 August 2012 | Kazaniecki, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 5366

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2012

| Patent document cited in search report | | Publication date | Patent family member(s) | | Publication date |
|---|---|---|---|---|---|
| US 5946320 | A | 31-08-1999 | AT | 221710 T | 15-08-2002 |
| | | | DE | 69527633 D1 | 05-09-2002 |
| | | | DE | 69527633 T2 | 03-04-2003 |
| | | | EP | 0771092 A1 | 02-05-1997 |
| | | | US | 5946320 A | 31-08-1999 |
| US 2010296601 | A1 | 25-11-2010 | KR | 20090061562 A | 16-06-2009 |
| | | | US | 2010296601 A1 | 25-11-2010 |
| | | | WO | 2009075508 A1 | 18-06-2009 |
| US 2009245436 | A1 | 01-10-2009 | CN | 101981853 A | 23-02-2011 |
| | | | EP | 2258068 A2 | 08-12-2010 |
| | | | JP | 2011516003 A | 19-05-2011 |
| | | | KR | 20100126839 A | 02-12-2010 |
| | | | KR | 20120034138 A | 09-04-2012 |
| | | | TW | 200952380 A | 16-12-2009 |
| | | | US | 2009245436 A1 | 01-10-2009 |
| | | | WO | 2009142815 A2 | 26-11-2009 |

EPO FORM P0459

For more details about this annex : see Official Journal of the European Patent Office, No. 12/82